# EUROPEAN PATENT SPECIFICATION

(11) **EP 2 980 963 B1**
(45) Date of publication and mention of the grant of the patent: **04.12.2019**
(21) Application number: 15179134.0
(22) Date of filing: 30.07.2015
(51) Int. Cl.: H02K 1/27

(54) **ROTOR OF A BRUSHLESS MOTOR**
ROTOR EINES BÜRSTENLOSEN MOTORS
ROTOR D'UN MOTEUR SANS BALAI

(30) Priority: 31.07.2014 US 201462031502 P
(43) Date of publication of application: 03.02.2016
(73) Proprietor: Steering Solutions IP Holding Corporation, Saginaw, MI 48601 (US)
(72) Inventor: Islam, Mohammad R., Saginaw, MI Michigan 48603 (US); Webber, Kenneth P., Saint Charles, MI Michigan 48655 (US); Streng, Delynn M., Freeland, MI Michigan 48623 (US); Sommer, Christopher J., Swartz Creek, MI Michigan 48473 (US)
(74) Representative: Manitz Finsterwald Patent- und Rechtsanwaltspartnerschaft mbB

(56) References cited:
- EP-A1- 0 043 981
- EP-A1- 1 780 870
- EP-A1- 2 395 631
- EP-A2- 0 410 048
- WO-A1-01/11756
- WO-A1-2006/067275
- WO-A1-2011/090394
- WO-A2-2013/081703
- DE-A1- 10 016 002
- JP-A- 2004 023 944
- JP-A- 2010 187 427
- US-A1- 2012 133 225
- US-A1- 2013 106 207

## Description

### BACKGROUND OF THE INVENTION

The present disclosure relates to brushless motors and more particularly to rotors of the brushless motors. The features of the preamble of the independent claim are known from WO 2006/067275 A1. Related technologies are known from EP 0 043 981 A1, JP 2010 187427 A, EP 1 780 870 A1 and WO 2013/081703 A2. Document DE 100 16 002 A1 discloses a step skewed rotor with a plurality of surface mounted, substantially rectangular first and second permanent magnets, each of the first and second permanent magnets including first and second segments disposed adjacent from one another.

For brushless PM motors, the cost of the permanent magnet depends on the shape of the magnet, and is also a function of the amount of finishing operation needed on the magnets. Surface mounted permanent magnets (SPM) with arc shape are desired to obtain lower cogging torque, lower BEMF harmonics and hence less torque ripple in the motor. Arc magnets (ring type or segment type which could be straight segment or skewed segment) need significant grinding to maintain tighter tolerances if the application requires low ripple performances. These magnets have lower material yield and thus the unit cost is higher too.

Interior permanent magnet (IPM) rotor designs with rectangular shaped magnets may thus be desirable to offset scrap cost and increase material yield. However, due to the shape of the magnet, the motor performance in regards to cogging, harmonics, ripple and thus noise are not ideal. Further, the magnets being located inside the rotor core and the traditional methods of cogging and harmonic cancellation through step skew, make the magnets and rotors in particular, difficult to manufacture. Hence, active cancellation of cogging torque and torque ripple is necessary. Moreover, active cancellation of cogging torque requires some voltage budget for cancellation which may negatively impacts the size of the motor.

Accordingly, improved rotor design is desirable to reduce manufacturing cost and improve torque efficiency and magnet retention.

### SUMMARY OF THE INVENTION

The present invention is defined in the independent claim. In the present disclosure, a brushless motor includes a stator disposed along an axis and a rotor disposed radially inward from the stator. The rotor includes a core, a plurality of first magnets and a plurality of second magnets configured to have opposite poles relative to the plurality of first magnets. The plurality of first and second magnets may each have a substantially rectangular cross-section and are in contact with a substantially flat surface carried by the core that faces radially outward.

In the present disclosure, a brushless motor includes a stator disposed along an axis, and a rotor disposed radially inward from the stator. The rotor includes a core, a plurality of first magnets and a plurality of second magnets configured to have opposite poles relative to the plurality of first magnets. Each one of the plurality of first and second magnets includes first and second segments having the same pole, and disposed adjacent to and spaced circumferentially apart from one-another. Each one of a plurality of T-shaped retainers of the rotor are disposed circumferentially between respective first and second segments.

These and other advantages and features will become more apparent from the following description taken in conjunction with the drawings.

### BRIEF DESCRIPTION OF THE DRAWINGS

The foregoing and other features, and advantages of the invention are apparent from the following detailed description taken in conjunction with the accompanying drawings in which:
FIG. 1 illustrates a rotor cross-section of a brushless motor;
FIG. 2 illustrates a partial enlarged view of the rotor taken from circle 2 of FIG. 1;
FIG. 3 illustrates a rotor cross-section of a brushless motor;
FIG. 4 illustrates a rotor cross-section in accordance with an embodiment of a brushless motor; and
FIG. 5 illustrates a partial enlarged view of the rotor taken from circle 5 of FIG. 4.

### DETAILED DESCRIPTION

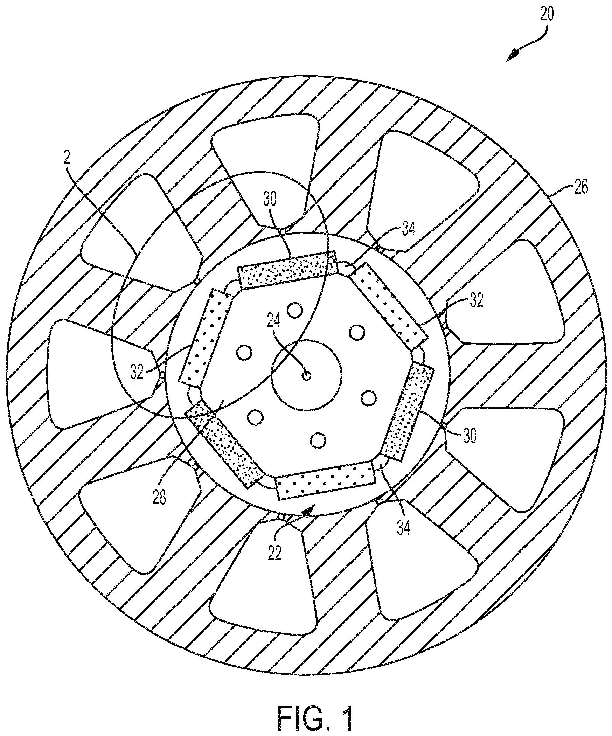

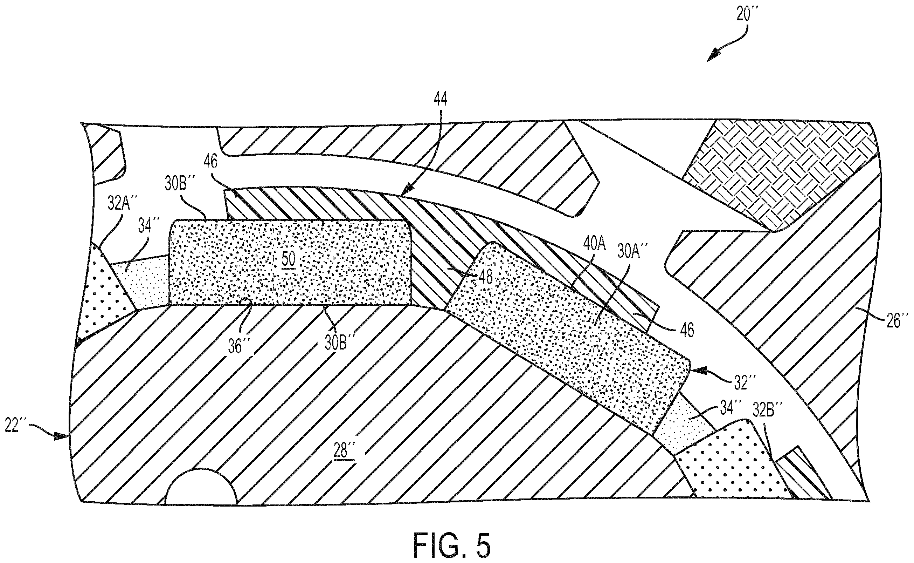

Referring now to the Figures, where the invention will be described with reference to specific embodiments, FIGS. 1-5 describe various examples of a rotor design with permanent magnets, that may be rectangular, mounted to a core.

The present disclosure seeks to compromise between active cancellation with some form of passive cancellation in the motor design and making a motor cost effective from a manufacturing and a material utilization perspective. Various techniques for what may be an interior permanent magnet (IPM) motor exist to minimize the cogging torque and harmonics but at the expense of added complexity and output torque. The present disclosure includes a simpler design technique to achieve these goals while keeping what may be a rectangular shaped magnet as is used in IPM brushless motors. Examples of the present disclosure illustrated in FIGS. 1-5 disclose a unique design associated with magnet retention in the rotor that uses low cost rectangular magnets, avoids complexity in the design to reduce cogging torque and also improves the torque output of the motor.

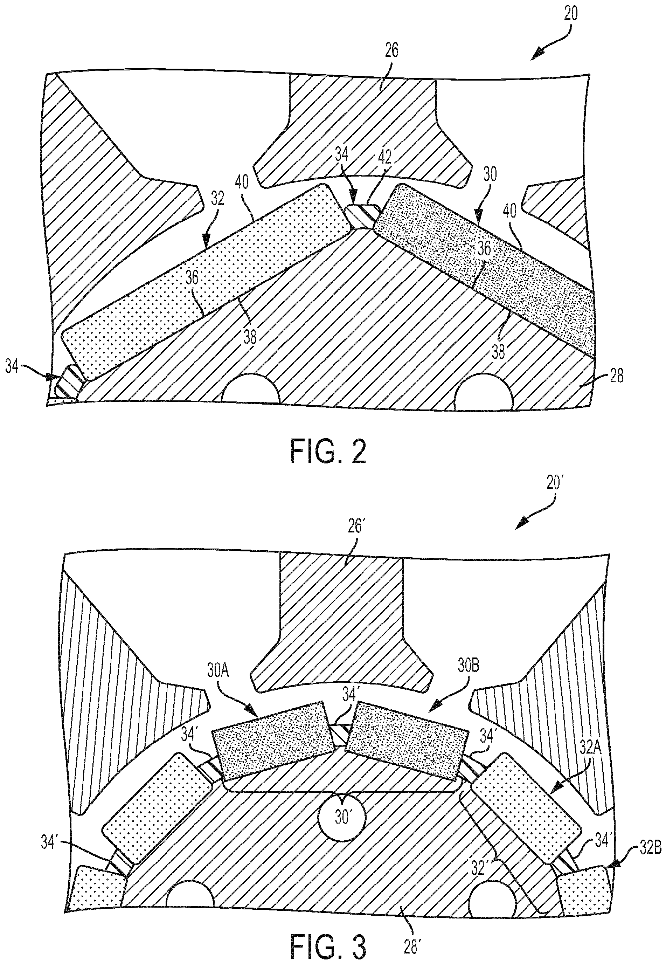

More specifically and referring to FIGS. 1 and 2, a brushless motor 20 includes a rotor 22 disposed along a rotational axis 24 and a stator 26 concentrically located to, and disposed radially outward from, the rotor 22. The rotor 22 includes a core 28 general made of a steel-based material, a plurality of first magnets 30 (e.g., three illustrated), a plurality of second magnets 32 (e.g., three illustrated), and a plurality of ribs 34 that may extend axially. The first and second magnets 30, 32 are orientated such that they have opposite poles to one-another, and are alternatively distributed circumferentially about the core 28. The magnets 30, 32 may have a substantially rectangular cross section and are generally adhered, or otherwise engaged, to substantially flat surfaces 36 carried by the core 28. Each first magnet 30 is spaced circumferentially from the adjacent second magnet 32, with a respective rib of the plurality of ribs 34 located there-between.

Each magnet 30, 32 may have opposite and substantially flat faces 38, 40 with the face 38 facing radially inward and in contact with surface 36 of the core 28, and the opposite face 40 facing radially outward toward and in close proximity to the stator 26. Each rib 34 projects radially outward from the core 28 and includes a distal end 42 that is generally disposed radially inward from the face 40 of the magnets 30, 32. The ribs 34 may be non-magnetic, may be made of a polymer, and may be molded directly to the core 28, as one, non-limiting example. It is further contemplated and understood that the ribs 34 may be of a magnetic material and may further be an extension of the core; however, as a magnetic material there may be some flux leakage between opposite poles.

Using rectangular magnets 30, 32 on the core surface may benefit the motor design from both a cost and an effectiveness of passive cancellation. FIGS. 1 and 2 illustrate a 6-pole motor design but several different designs are contemplated including 8 or more poles. The brushless motor 20 may generally be a surface permanent magnet (SPM) motor.

Referring to FIG. 3, a brushless motor is illustrated wherein like elements to Fig. 1 have like identifying numerals except with the addition of a prime symbol suffix. A brushless motor 20' includes a plurality of magnets 30' each having first and second segments 30A, 30B of the same polarity, and a plurality of magnets 32' each having first and second segments 32A, 32B of the same polarity and opposite the first and second segments 30A, 30B polarity. The segments 30A, 30B of the first magnet 30' are circumferentially spaced from, and adjacent to, one-another (i.e., no other magnets located circumferentially there-between). Similarly, the segments 32A, 32B of the second magnet 32' are circumferentially spaced from, and adjacent to, one-another. Ribs 34' may be located circumferentially between the magnets 30', 32', between the segments 30A, 30B and between the segments 32A, 32B. The segments 30A, 30B, 32A, 32B may generally have a rectangular cross section. The motor 20' may be a SPM motor.

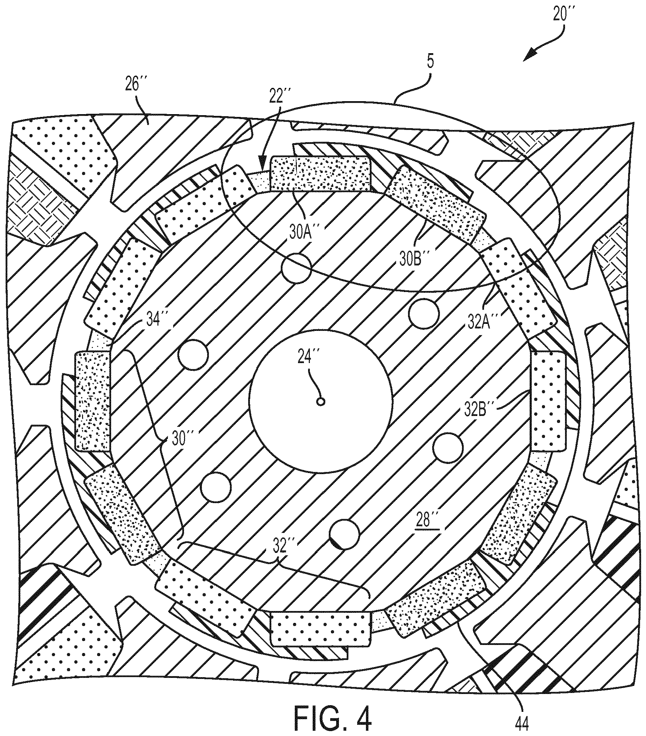

Referring to FIG. 4, an embodiment of a brushless motor is illustrated wherein like elements to Fig. 1 have like identifying numerals except with the addition of a double prime symbol suffix. A brushless motor 20" may include first magnets 30" each having segments 30A", 30B", and second magnets 32" each having segments 32A", 32B". The first and second magnets 30", 32" are spaced circumferentially from one-another by a rib 34". The first and second segments 30A", 30B" may be separated by a retainer 44 that may be T-shaped. The first and second segments 32A", 32B" may also be separated by a similar retainer 44.

Each retainer 44 may include a flange portion 46 and a base portion 48, which is engaged to and spans radially between a core 28" of the rotor 22" and a midpoint of the flange portion 46. The flange portion 46 spans circumferentially and over (i.e. radially outward from) a portion of substantially flat faces 40A, 40B of the respective segments 30A", 30B" and the respective segments 32A", 32B". The retainers 44 may be made of a magnetic material (e.g., same material as the core). The retainers 44 may be cast with the core 28" and/or machined. The retainers 44 may further be manufactured separate from the core 28" and attached to the core via a mechanical means, welding, and/or other adherence.

The boundaries of an opening 50 for receipt of any one of the magnet segments 30A", 30B", 32A", 32B" may be defined by a flat surface 36" of the core 28", the retainer 44 and the rib 34". During assembly, the magnet segments 30A", 30B", 32A", 32B" may be mounted to the core 28" by sliding the segments 30A", 30B", 32A", 32B" in a substantially axial direction and through the opening 50.

Because manufacturing of the motor 20" does not require the more traditional over mold processes that create internal pressure, the bulging and breakage (i.e., typically at more traditional web locations) is avoided. By bridging the segments 30A", 30B" of magnet 30" and bridging the segments 32A", 32B" of magnet 32" with the retainers 44, passive cancellation with a step skewed rotor 22" is easier since the magnets 30", 32" are closer to or at the outer rotor face. Moreover, the bulging and breaking problems with more traditional IPM motors at web locations is eliminated with the T-shaped retainer design. Yet further, the more traditional web is completely eliminated with use of the T-shaped retainer 44. Because the ribs 34" of the present disclosure generally replace the more traditional bridges made of the core material, there is no flux shorting bridge between opposite poles, rather the T-shaped retainer 44 facilitates concentration of the flux from the magnets belonging to the same pole. Advantageously, magnet retention of the motor 20" is about as good as magnet retention for more traditional IPM motors.

## Claims

1. A brushless motor (20) comprising:
a stator (26) disposed along an axis (24); and
a rotor (22) disposed radially inward from the stator (26), and including a core (28), a plurality of first magnets (30) and a plurality of second magnets (320) configured to have opposite poles relative to the plurality of first magnets (30), and wherein the plurality of first and second magnets (30, 32) each have a substantially rectangular cross-section and are in contact with a substantially flat surface (38) carried by the core (28) that faces radially outward,
wherein each one of the plurality of first and second magnets (30, 32) include first and second segments (30A", 30B", 32A", 32B") disposed adjacent to and spaced circumferentially apart from one-another,
**characterized in that**
the rotor (22) includes a plurality of T-shaped retainers (44) disposed circumferentially between the first and second segments (30A", 30B", 32A", 32B"),
wherein each one of the T-shaped retainers (44) includes a flange portion (46) spanning circumferentially over a portion of the first and second segments (30A", 30B", 32A", 32B") of each one of the plurality of first and second magnets (30, 32), and a base portion (48) engaged to and projecting radially between the core (28) and the flange portion (46),
wherein the rotor (22) includes a plurality of ribs (34") projecting radially outward from the core (28) and distributed circumferentially between each one of the plurality of first and second magnets (30, 32).

2. The brushless motor set forth in claim 1, wherein the rotor (22) is a surface mounted permanent magnet rotor.

3. The brushless motor set forth in claim 1, wherein the plurality of first and second magnets (30, 32) project radially outward at least as far as the plurality of ribs (34").

4. The brushless motor set forth in claim 3, wherein the plurality of ribs (34") are non-magnetic.

5. The brushless motor set forth in claim 4, wherein the plurality of T-shaped retainers (44) are made of a magnetic material, and the plurality of ribs (34") are made of a polymer material and molded to the core (28).

6. The brushless motor set forth in claim 1, wherein the core (28), a T-shaped retainer (44) of the plurality of T-shaped retainers (44) and a rib (34") of the plurality of ribs (34") generally define an opening for axial insertion of one of the first and second segments (30A", 30B", 32A", 32B") of one of the plurality of first and second magnets (30, 32).

## Patentansprüche

1. Bürstenloser Motor (20), der umfasst:
einen Stator (26), der entlang einer Achse (24) angeordnet ist; und
einen Rotor (22), der vom Stator (26) aus radial nach innen angeordnet ist und einen Kern (28), eine Vielzahl von ersten Magneten (30) und eine Vielzahl von zweiten Magneten (320) beinhaltet, die so konfiguriert sind, dass sie bezüglich der Vielzahl von ersten Magneten (30) entgegengesetzte Pole aufweisen, und wobei die Vielzahl von ersten und zweiten Magneten (30, 32) jeweils einen im Wesentlichen rechteckigen Querschnitt aufweisen und mit einer im Wesentlichen ebenen Oberfläche (38) in Kontakt stehen, die von dem Kern (28) getragen wird und radial nach außen gerichtet ist,
wobei jeder der Vielzahl von ersten und zweiten Magneten (30, 32) erste und zweite Segmente (30A", 30B", 32A", 32B") beinhaltet, die angrenzend aneinander und in Umfangsrichtung voneinander beabstandet angeordnet sind,
**dadurch gekennzeichnet, dass**
der Rotor (22) eine Vielzahl von T-förmigen Halterungen (44) beinhaltet, die in Umfangsrichtung zwischen den ersten und zweiten Segmenten (30A", 30B", 32A", 32B") angeordnet sind,
wobei jede der T-förmigen Halterungen (44) einen Flanschabschnitt (46), der in Umfangsrichtung einen Abschnitt der ersten und zweiten Segmente (30A", 30B", 32A", 32B") jedes der Vielzahl von ersten und zweiten Magneten (30, 32) überspannt, und einen Basisabschnitt (48) beinhaltet, der mit dem Kern (28) und dem Flanschabschnitt (46) in Eingriff steht und dazwischen radial vorsteht,
wobei der Rotor (22) eine Vielzahl von Rippen (34") beinhaltet, die von dem Kern (28) aus radial nach außen vorstehen und in Umfangsrichtung zwischen jedem der Vielzahl von ersten und zweiten Magneten (30, 32) verteilt sind.

2. Bürstenloser Motor nach Anspruch 1, wobei der Rotor (22) ein Rotor mit oberflächenmontierten Permanentmagneten ist.

3. Bürstenloser Motor nach Anspruch 1, wobei die Vielzahl von ersten und zweiten Magneten (30, 32) mindestens so weit wie die Vielzahl von Rippen (34") radial nach außen ragt.

4. Bürstenloser Motor nach Anspruch 3, wobei die Vielzahl von Rippen (34") nicht magnetisch ist.

5. Bürstenloser Motor nach Anspruch 4, wobei die Vielzahl von T-förmigen Halterungen (44) aus einem magnetischen Material besteht, und die Vielzahl von Rippen (34") aus einem Polymermaterial besteht und an den Kern (28) geformt ist.

6. Bürstenloser Motor nach Anspruch 1, wobei der Kern (28), eine T-förmige Halterung (44) aus der Vielzahl von T-förmigen Halterungen (44) und eine Rippe (34") aus der Vielzahl von Rippen (34") im Allgemeinen eine Öffnung zum axialen Einsetzen eines der ersten und zweiten Segmente (30A", 30B", 32A", 32B") eines der Vielzahl von ersten und zweiten Magneten (30, 32) definieren.

## Revendications

1. Moteur sans balais (20) comprenant :
un stator (26) disposé le long d'un axe (24) ; et
un rotor (22) disposé radialement à l'intérieur du stator (26) et incluant un noyau (28), une pluralité de premiers aimants (30) et une pluralité de seconds aimants (320) configurés pour avoir des pôles opposés par rapport à la pluralité de premiers aimants (30), et dans lequel la pluralité de premiers et de seconds aimants (30, 32) ont chacun une section transversale sensiblement rectangulaire et sont en contact avec une surface sensiblement plane (38) portée par le noyau (28) qui fait face radialement vers l'extérieur,
dans lequel chacun de la pluralité de premiers et de seconds aimants (30, 32) inclut un premier et un second segment (30A", 30B", 32A", 32B") disposé adjacents l'un à l'autre et espacés circonférentiellement l'un de l'autre,
**caractérisé en ce que**
le rotor (22) inclut une pluralité d'éléments de retenue (44) en forme de T disposés circonférentiellement entre le premier et le second segment (30A", 30B", 32A", 32B"),
dans lequel chacun des éléments de retenue (44) en forme de T inclut une portion de bride (46) coiffant circonférentiellement une portion du premier et du second segment (30A", 30B", 32A", 32B") de chacun de la pluralité de premiers et de seconds aimants (30, 32), et une portion de base (48) engagée sur et se projetant radialement entre le noyau (28) et la portion de bride (46),
dans lequel le rotor (22) inclut une pluralité de nervures (34") qui se projettent radialement vers l'extérieur depuis le noyau (28) et qui sont distribuées circonférentiellement entre chacun de la pluralité de premiers et de seconds aimants (30, 32).

2. Moteur sans balais selon la revendication 1, dans lequel le rotor (22) est un rotor à aimant permanent monté en surface.

3. Moteur sans balais selon la revendication 1, dans lequel la pluralité de premiers et de seconds aimants (30, 32) se projettent radialement vers l'extérieur au moins aussi loin que la pluralité de nervures (34").

4. Moteur sans balais selon la revendication 3, dans lequel la pluralité de nervures (34") sont non magnétiques.

5. Moteur sans balais selon la revendication 4, dans lequel la pluralité d'éléments de retenue (44) en forme de T sont faits d'un matériau magnétique, et la pluralité de nervures (34") sont faites d'un matériau en polymère et sont moulées sur le noyau (28).

6. Moteur sans balais selon la revendication 1, dans lequel le noyau (28), un élément de retenue (44) en forme de T parmi la pluralité d'éléments de retenue (44) en forme de T, et une nervure (34") de la pluralité de nervures (34") définissent généralement une ouverture pour insertion axiale d'un segment parmi le premier et le second segment (30A", 30B", 32A", 32B") d'un aimant parmi la pluralité de premiers et de seconds aimants (30, 32).
